(19) Europäisches Patentamt

European Patent Office

Office européen des brevets

(11) **EP 4 693 869 A1**

(12) **EUROPEAN PATENT APPLICATION**
published in accordance with Art. 153(4) EPC

(43) Date of publication:
**11.02.2026 Bulletin 2026/07**

(21) Application number: **23940973.3**

(22) Date of filing: **12.06.2023**

(51) International Patent Classification (IPC):
*H02M 3/335* (2006.01)

(52) Cooperative Patent Classification (CPC):
**H02M 3/335**

(86) International application number:
**PCT/CN2023/099702**

(87) International publication number:
**WO 2024/254735 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Digital Power Technologies Co., Ltd.
Shenzhen, Guangdong 518043 (CN)**

(72) Inventors:
• **LUO, Yiwen**
**Shenzhen, Guangdong 518043 (CN)**
• **CHIN, Ken**
**Shenzhen, Guangdong 518043 (CN)**
• **QIU, Nengchao**
**Shenzhen, Guangdong 518043 (CN)**
• **ZHANG, Xinzhong**
**Shenzhen, Guangdong 518043 (CN)**

(74) Representative: **Isarpatent
Patent- und Rechtsanwälte Partg mbB
Friedrichstraße 31
80801 München (DE)**

(54) **POWER SUPPLY MODULE, ROUTER, SWITCH, AND ELECTRONIC DEVICE**

(57)     Embodiments of this application disclose a power module, a router, a switch, and an electronic device. The power module includes a control circuit and a voltage conversion circuit capable of supplying power to a load. The control circuit may include a sampling and amplification circuit, a comparison circuit, and a processing circuit. The sampling and amplification circuit is configured to sample a first current output by the voltage conversion circuit, amplify the first current based on a preset coefficient, and output a second current. The comparison circuit may compare the second current with a first overcurrent threshold, and output a first comparison signal when the second current is greater than or equal to the first overcurrent threshold. The processing circuit may stop outputting a pulse signal to the voltage conversion circuit when receiving the first comparison signal, to perform overcurrent protection on the voltage conversion circuit. In this application, a problem in the conventional technology that overcurrent protection cannot be accurately performed on the power module in a timely manner can be resolved, and security and stability of the power module can be improved.

FIG. 4

EP 4 693 869 A1

**Description**

**TECHNICAL FIELD**

This application relates to the field of power electronics technologies, and in particular, to a power module, a router, a switch, and an electronic device.

**BACKGROUND**

A DC-DC conversion module has advantages such as low power consumption, high efficiency, and a wide voltage regulation range, and therefore is widely used in the electronic power field. In some possible scenarios, for example, if an output power of the DC-DC conversion module is very large, a problem such as overstress damage to a power element of a power module may be caused.

In some solutions, an overcurrent state of a primary side is monitored by obtaining a rectifier voltage of a secondary side. If it is detected that a pulse signal is lost, it may be determined that the power element is faulty, thereby triggering overcurrent protection. However, in the foregoing solutions, the overcurrent state cannot be accurately protected in a timely manner, a detected signal needs to be transmitted from the secondary side to the primary side, and consequently a system is complex. Therefore, how to accurately perform overcurrent protection on the DC-DC conversion module in a timely manner is an urgent problem that needs to be resolved currently.

**SUMMARY**

This application provides a power module, a router, a switch, and an electronic device, to resolve a problem in the conventional technology that overcurrent protection cannot be accurately performed on the power module in a timely manner. In this application, security and stability of the power module can be improved, and product competitiveness can be improved.

A first aspect of this application further provides a power module. The power module may include a control circuit and a voltage conversion circuit configured to supply power to a load. The control circuit is configured to control the voltage conversion circuit. The control circuit includes a sampling and amplification circuit, a comparison circuit, and a processing circuit. The sampling and amplification circuit may sample a first current output by the voltage conversion circuit, amplify the first current based on a preset coefficient, and output a second current. The comparison circuit may compare the second current with a first overcurrent threshold, and output a first comparison signal when the second current is greater than or equal to the first overcurrent threshold. The processing circuit may stop outputting a pulse signal to the voltage conversion circuit when receiving the first comparison signal, to perform overcurrent protection on the voltage conversion circuit. According to the power module in this application, an output parameter of the voltage conversion circuit is sampled through the sampling and amplification circuit, high-precision amplification is performed on the output parameter, and an amplified output parameter is compared with a protection threshold, to implement a more accurate overload protection function. In this application, a problem in the conventional technology that overcurrent protection cannot be accurately performed on the power module in a timely manner can be resolved, security and stability of the power module can be improved, and product competitiveness can be improved.

In an optional implementation, the comparison circuit is further configured to: compare the second current with a second overcurrent threshold, and output a second comparison signal when the second current is greater than or equal to the second overcurrent threshold. The processing circuit is configured to output the pulse signal to the voltage conversion circuit within a first time period of one or more switching cycles, and start timing when receiving the second comparison signal at a midpoint moment of the first time period. The processing circuit stops outputting the pulse signal to the voltage conversion circuit when a timing time reaches a preset time. Based on such a design, the control circuit in this application samples an output parameter at the midpoint moment of the time period in which a PWM signal is at a high level, and determines whether the output parameter is overcurrent, so that overload protection precision is high, thereby implementing slow overcurrent protection on the power module.

In an optional implementation, the comparison circuit is configured to compare the second current with a third overcurrent threshold, and output a third comparison signal when the second current is less than the third overcurrent threshold, where the third overcurrent threshold is less than the first overcurrent threshold. The processing circuit may further stop outputting the pulse signal to the voltage conversion circuit when receiving the third comparison signal. Based on such a design, in this application, backflow current protection can be implemented on the power module, and the security and the stability of the power module can be improved.

In an optional implementation, the comparison circuit may further compare the second current with a fourth overcurrent threshold, and output a fourth comparison signal when the second current is greater than or equal to the fourth overcurrent threshold. The processing circuit is further configured to stop outputting the pulse signal to the voltage conversion circuit in the one or more switching cycles when receiving the fourth comparison signal, to perform overcurrent protection on the voltage conversion circuit.

In an optional implementation, the comparison circuit is configured to compare a second output parameter with a fourth threshold, and output the fourth comparison signal when the second output parameter is greater than or equal to the fourth threshold. The processing circuit is further configured to stop outputting the pulse signal to the voltage conversion circuit in the one or more switching cycles when receiving the fourth comparison signal. Based on such a design, in this application, signal-by-signal current limiting protection can be implemented on the power module, and the security and the stability of the power module can be improved.

In an optional implementation, the sampling and amplification circuit includes an amplifier, a first transistor, a first current source, a second current source, and a third current source. A first input end of the amplifier is connected to a first output end of the voltage conversion circuit via a first resistor. A second input end of the amplifier is connected to a second output end of the voltage conversion circuit via a second resistor. The first current source is electrically connected to the first resistor and the first input end of the amplifier. An output end of the amplifier is electrically connected to a first end of the first transistor. A second end of the first transistor is electrically connected to the second input end of the amplifier. A third end of the first transistor is electrically connected to the second current source. The third current source is grounded via a third resistor. A first node between the third current source and the third resistor is connected to the comparison circuit. The second current source and the third current source form a current mirror. Based on such a design, in this application, sampling and amplification can be implemented on the output parameter of the voltage conversion circuit. In other words, in this application, high-precision amplification can be performed on a parameter such as a current.

In an optional implementation, the comparison circuit may include a first comparator, a second comparator, a third comparator, and a fourth comparator. A first input end of the first comparator is connected to the first node, a second input end of the comparator is electrically connected to the processing circuit, and an output end of the first comparator is electrically connected to the processing circuit. A first input end of the second comparator is connected to the first node, a second input end of the second comparator is electrically connected to a reference voltage generation circuit, and an output end of the second comparator is electrically connected to the processing circuit. A first input end of the third comparator is connected to the first node, a second input end of the third comparator is electrically connected to the processing circuit, and an output end of the third comparator is electrically connected to the processing circuit. A first input end of the fourth comparator is connected to the first node, a second input end of the fourth comparator is electrically connected to the processing circuit, and an output end of the fourth comparator is electrically connected to the processing circuit.

In an optional implementation, the control circuit may further include a reference voltage generation circuit. The reference voltage generation circuit includes a fourth current source, a fifth current source, and a first voltage source. A first end of the first voltage source is grounded. A second end of the first voltage source is grounded via a fourth resistor. The second end of the first voltage source is further connected to a power supply via a fifth resistor. The fourth current source is grounded via a sixth resistor. Two ends of the sixth resistor are respectively connected to two ends of the fifth current source. The fifth current source is configured to receive a slope compensation reset signal. A node between the fourth current source and the sixth resistor is electrically connected to the comparison circuit.

A second aspect of this application further provides an electronic device. The electronic device includes an input power supply and a power module. The input power supply may be configured to supply power to the power module. The power module may include a control circuit and a voltage conversion circuit configured to supply power to a load. The control circuit is configured to control the voltage conversion circuit. The control circuit may include a sampling and amplification circuit, a comparison circuit, and a processing circuit. The sampling and amplification circuit may sample a first current output by the voltage conversion circuit, amplify the first current based on a preset coefficient, and output a second current. The comparison circuit may compare the second current with a first overcurrent threshold, and output a first comparison signal when the second current is greater than or equal to the first overcurrent threshold. The processing circuit may stop outputting a pulse signal to the voltage conversion circuit when receiving the first comparison signal, to perform overcurrent protection on the voltage conversion circuit. According to the power module in this application, an output parameter of the voltage conversion circuit is sampled through the sampling and amplification circuit, high-precision amplification is performed on the output parameter, and the amplified output parameter is compared with a protection threshold, to implement a more accurate overload protection function. In this application, a problem in the conventional technology that overcurrent protection cannot be accurately performed on the power module in a timely manner can be resolved, security and stability of the power module can be improved, and product competitiveness can be improved.

In an optional implementation, the comparison circuit is further configured to: compare the second current with a second overcurrent threshold, and output a second comparison signal when the second current is greater than or equal to the second overcurrent threshold. The processing circuit is configured to output the pulse signal to the voltage conversion circuit within a first time period of one or more switching cycles, and start timing when receiving the second comparison signal at a midpoint moment of the first time period. The processing circuit stops outputting the pulse signal to the voltage conversion circuit when a timing time reaches a preset time. Based on such a design, the control circuit in this application samples an output parameter at the midpoint moment of the time period in which a PWM signal is at a high level, and determines whether the output parameter is overcurrent, so that overload protection precision is high, thereby implementing slow overcurrent protection on the power module.

In an optional implementation, the comparison circuit is configured to compare the second current with a third overcurrent threshold, and output a third comparison signal when the second current is less than the third overcurrent threshold, where the third overcurrent threshold is less than the first overcurrent threshold. The processing circuit may further stop outputting the pulse signal to the voltage conversion circuit when receiving the third comparison signal. Based on such a design, in this application, backflow current protection can be implemented on the power module, and the security and the stability of the power module can be improved.

In an optional implementation, the comparison circuit may further compare the second current with a fourth overcurrent threshold, and output a fourth comparison signal when the second current is greater than or equal to the fourth overcurrent threshold. The processing circuit is further configured to stop outputting the pulse signal to the voltage conversion circuit in the one or more switching cycles when receiving the fourth comparison signal, to perform overcurrent protection on the voltage conversion circuit.

In an optional implementation, the comparison circuit is configured to compare a second output parameter with a fourth threshold, and output the fourth comparison signal when the second output parameter is greater than or equal to the fourth threshold. The processing circuit is further configured to stop outputting the pulse signal to the voltage conversion circuit in the one or more switching cycles when receiving the fourth comparison signal. Based on such a design, in this application, signal-by-signal current limiting protection can be implemented on the power module, and the security and the stability of the power module can be improved.

In an optional implementation, the sampling and amplification circuit includes an amplifier, a first transistor, a first current source, a second current source, and a third current source. A first input end of the amplifier is connected to a first output end of the voltage conversion circuit via a first resistor. A second input end of the amplifier is connected to a second output end of the voltage conversion circuit via a second resistor. The first current source is electrically connected to the first resistor and the first input end of the amplifier. An output end of the amplifier is electrically connected to a first end of the first transistor. A second end of the first transistor is electrically connected to the second input end of the amplifier. A third end of the first transistor is electrically connected to the second current source. The third current source is grounded via a third resistor. A first node between the third current source and the third resistor is connected to the comparison circuit. The second current source and the third current source form a current mirror. Based on such a design, in this application, sampling and amplification can be implemented on the output parameter of the voltage conversion circuit. In other words, in this application, high-precision amplification can be performed on a parameter such as a current.

In an optional implementation, the comparison circuit may include a first comparator, a second comparator, a third comparator, and a fourth comparator. A first input end of the first comparator is connected to the first node, a second input end of the comparator is electrically connected to the processing circuit, and an output end of the first comparator is electrically connected to the processing circuit. A first input end of the second comparator is connected to the first node, a second input end of the second comparator is electrically connected to a reference voltage generation circuit, and an output end of the second comparator is electrically connected to the processing circuit. A first input end of the third comparator is connected to the first node, a second input end of the third comparator is electrically connected to the processing circuit, and an output end of the third comparator is electrically connected to the processing circuit. A first input end of the fourth comparator is connected to the first node, a second input end of the fourth comparator is electrically connected to the processing circuit, and an output end of the fourth comparator is electrically connected to the processing circuit.

In an optional implementation, the control circuit further includes a reference voltage generation circuit. The reference voltage generation circuit includes a fourth current source, a fifth current source, and a first voltage source. A first end of the first voltage source is grounded. A second end of the first voltage source is grounded via a fourth resistor. The second end of the first voltage source is further connected to a power supply via a fifth resistor. The fourth current source is grounded via a sixth resistor. Two ends of the sixth resistor are respectively connected to two ends of the fifth current source. The fifth current source is configured to receive a slope compensation reset signal. A node between the fourth current source and the sixth resistor is electrically connected to the comparison circuit.

A third aspect of this application further provides a router. The router may include the foregoing power module and one or more chips. The power module may be connected to the one or more chips, to supply power to the one or more chips.

A fourth aspect of this application further provides a switch. The switch may include the foregoing power module and one or more chips. The power module may be connected to the one or more chips, to supply power to the one or more chips.

In embodiments of this application, the power module, the router, the switch, and the electronic device are provided, to resolve a problem in the conventional technology that overcurrent protection cannot be accurately performed on the power module in a timely manner. Multiple current protection can be implemented by using a simple circuit structure, and an accurate overload protection function can be implemented, thereby improving security and stability of the power module.

**BRIEF DESCRIPTION OF DRAWINGS**

FIG. 1 is a schematic of a structure of an electronic device according to this application;
FIG. 2 is a schematic of another structure of an electronic device according to this application;
FIG. 3 is a schematic of another structure of an electronic device according to this application;
FIG. 4 is a schematic of a structure of a power module according to this application;
FIG. 5 is a schematic of a structure of a sampling and amplification circuit according to this application;
FIG. 6 is a signal sequence diagram when a power module performs slow overcurrent protection;
FIG. 7 is another signal sequence diagram when a power module performs slow overcurrent protection;
FIG. 8 is a signal sequence diagram when a power module performs fast overcurrent protection;
FIG. 9 is a signal sequence diagram when a power module performs backflow current protection;
FIG. 10 is another signal sequence diagram when a power module performs backflow current protection;
FIG. 11 is a signal sequence diagram when a power module performs signal-by-signal current limiting protection;
FIG. 12 is a schematic of another structure of a power module according to this application;
FIG. 13 is a schematic of a structure of a router according to this application; and
FIG. 14 is a schematic of a structure of a switch according to this application.

**DESCRIPTION OF EMBODIMENTS**

In embodiments of this application, terms such as "first" and "second" are only intended to distinguish between different objects, but should not be understood as indicating or implying relative importance, or should not be understood as indicating or implying a sequence. For example, a first application, a second application, and the like are used to distinguish between different applications, but are not used to describe a particular sequence of the applications. A feature limited to "first" and "second" may explicitly or implicitly include one or more of the features.

It should be noted that when an element is considered as "connected to" another element, the element may be directly connected to the another element, or a centrally disposed element may simultaneously exist. When an element is considered as "disposed on" another element, the element may be directly disposed on the another element, or a centrally disposed element may simultaneously exist.

Usually, in a scenario that an output power of a DC-DC conversion module is very large, a problem such as overstress damage to a power element of a power module is caused. In some solutions, an overcurrent state of a primary side is monitored by obtaining a rectifier voltage of a secondary side. If it is detected that a pulse signal is lost, it may be determined that the power element is faulty, thereby triggering overcurrent protection. However, in the foregoing solution, an overcurrent of the power module cannot be accurately protected, a detected signal further needs to be transmitted from the secondary side to the primary side, and consequently a system is complex. Therefore, how to accurately perform overcurrent protection on the DC-DC conversion module in a timely manner is a problem that needs to be urgently resolved currently.

For the foregoing problem, embodiments of this application provide a power module, a router, a switch, and an electronic device. According to embodiments of this application, a simple and reliable current sampling manner can be used, so that more accurate overload protection is implemented on the power module. This improves security and stability of the power module, and further improves product competitiveness. The following separately provides detailed descriptions by using specific embodiments.

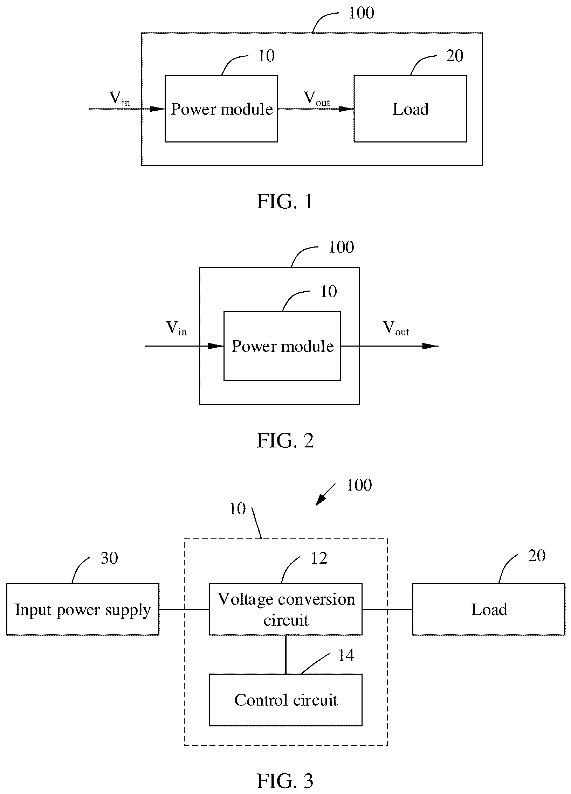

FIG. 1 is a schematic of a structure of an electronic device 100 according to an embodiment of this application.

As shown in FIG. 1, the electronic device 100 may include a power module 10 and a load 20. The power module 10 is configured to receive an input voltage $V_{in}$, and provide an output voltage $V_{out}$, to supply power to the load 20. In an embodiment, the input voltage $V_{in}$ may be provided by an external power supply, or may be provided by an internal power supply of the electronic device 100. It may be understood that the electronic device 100 provided in the embodiment shown in FIG. 1 may be a power-consuming device such as a mobile phone, a notebook computer, a computer chassis, a smart speaker, a smartwatch, or a wearable device. It may be understood that the power module 10 may be used in the electronic device 100 shown in FIG. 1.

FIG. 2 is a schematic of another structure of an electronic device 100 according to an embodiment of this application.

As shown in FIG. 2, the electronic device 100 may include a power module 10. The power module 10 may be configured to receive an input voltage $V_{in}$, and provide an output voltage $V_{out}$, to supply power to a load subsequently connected to the electronic device 100. In an embodiment, the input voltage $V_{in}$ may be provided by an external power supply, or may be provided by an internal power supply of the electronic device 100.

As shown in FIG. 2, the electronic device 100 provided in this embodiment may be a power supply device such as a power adapter, a charger, or a mobile power supply. The power module 10 provided in this embodiment of this application may be used in the electronic device 100 shown in FIG. 2.

In an embodiment of this application, the electronic device 100 may alternatively include a plurality of power modules 10, and the plurality of power modules 10 provide output voltages $V_{out}$, to supply power to the load 20. In an embodiment of this application, the electronic device 100 may include a plurality of loads 20, and the power module 10 may provide a plurality of output voltages $V_{out}$, to separately supply power to the plurality of loads 20. In an embodiment of this application, the electronic device 100 may include a plurality of power modules 10 and a plurality of loads 20, and the plurality of power modules 10 may provide a plurality of output voltages $V_{out}$, to separately supply power to the plurality of loads 20.

In an embodiment of this application, the input voltage $V_{in}$ may be an alternating current, and the power module 10 may include an alternating current-to-direct current conversion circuit. In this embodiment of this application, the input voltage $V_{in}$ may be a direct current, the internal power supply may include an energy storage apparatus, and the power module 10 may include a direct current conversion circuit. Correspondingly, when the electronic device 100 operates independently, the energy storage apparatus of the internal power supply may supply power to the power module 10.

In an embodiment of this application, the input voltage $V_{in}$ may be a direct current. The load 20 of the electronic device 100 may include one or more of a power-consuming apparatus, an energy storage apparatus, or an external device. In an embodiment, the load 20 may be a power-consuming apparatus of the electronic device 100, for example, a processor or a display. In an embodiment, the load 20 may be an energy storage apparatus of the electronic device 100, for example, a battery. In an embodiment, the load 20 may be an external device of the electronic device 100, for example, another electronic device such as a display or a keyboard.

The following describes in detail an internal structure of the power module.

FIG. 3 is a schematic of a structure of an electronic device 100 according to an embodiment of this application.

In an example, the electronic device 100 may include a power module 10, a load 20, and an input power supply 30. The power module 10 is electrically connected between the input power supply 30 and the load 20. The power module 10 in this embodiment may include a voltage conversion circuit 12 and a control circuit 14.

The voltage conversion circuit 12 may be connected between the input power supply 30 and the load 20. It may be understood that the voltage conversion circuit 12 may be configured to receive an input voltage of the input power supply 30 and provide an output voltage for the load 20. For example, the voltage conversion circuit 12 may convert the input voltage of the input power supply 30, and provide the output voltage to the load 20, to supply power to the load 20.

In this embodiment, the control circuit 14 may be configured to be electrically connected to the voltage conversion circuit 12, and may be configured to obtain an output parameter of the voltage conversion circuit 12.

In some application scenarios, the control circuit 14 may be further configured to process the parameter of the voltage conversion circuit 12, and correspondingly output a pulse width modulation (Pulse Width Modulation, PWM) signal to the voltage conversion circuit 12.

In some possible embodiments, the input power supply 30 may be a 48 V power supply.

For example, the input power supply 30 may output a first voltage to the voltage conversion circuit 12, so that the voltage conversion circuit 12 may convert the first voltage into a second voltage. It may be understood that in some possible application scenarios, the first voltage may be a 48 V direct current voltage. The second voltage may be a 12 V direct current voltage. In other words, the voltage conversion circuit 12 may convert a 48 V direct current voltage input by the input power supply 30 into a 12 V direct current voltage. The voltage conversion circuit 12 may output the 12 V direct current voltage obtained through conversion to the load 20, to supply power to the load 20.

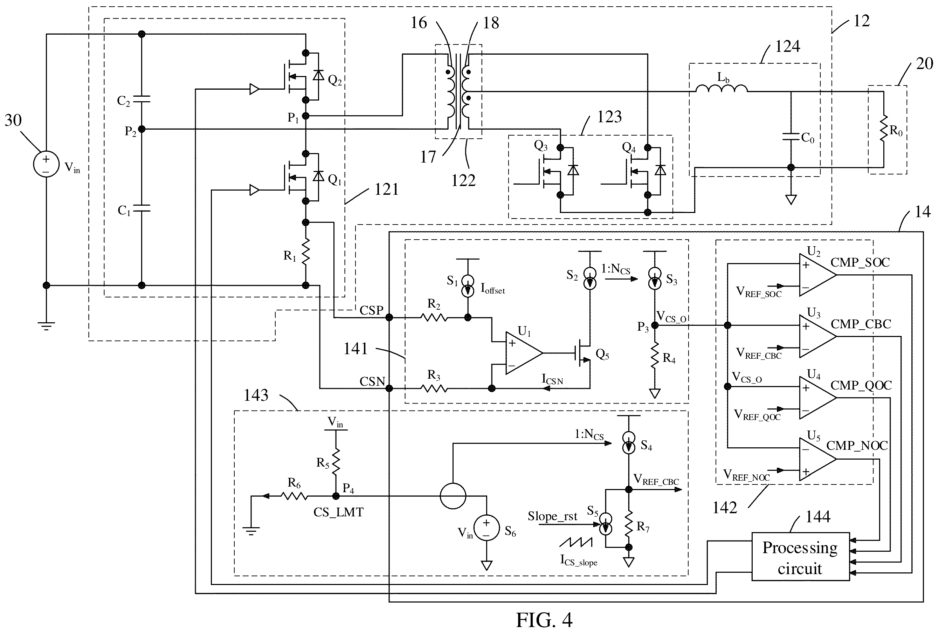

FIG. 4 is a schematic of a structure of a power module 10 according to an embodiment of this application.

In this embodiment, a voltage conversion circuit 12 may include a power stage circuit 121, a transformer 122, and a rectifier circuit 123.

The power stage circuit 121 in this embodiment is a half-bridge circuit. To be specific, the power stage circuit 121 may include a switching transistor $Q_1$ and a switching transistor $Q_2$.

It may be understood that a control circuit 14 may send control signals to the switching transistor $Q_1$ and the switching transistor $Q_2$, so that the switching transistor $Q_1$ and the switching transistor $Q_2$ may be turned on or off based on the received control signals. A first end of the switching transistor $Q_2$ is connected to a first output end of an input power supply 30, a second end of the switching transistor $Q_2$ is connected to a first end of the switching transistor $Q_1$, and a second end of the switching transistor $Q_1$ is connected to a second output end of the input power supply 30 and a reference ground via a resistor $R_1$. A third end of the switching transistor $Q_2$ is a control end of the switching transistor $Q_2$. In other words, the third end of the switching transistor $Q_2$ may be configured to receive the control signal sent by the control circuit 14. A third end of the switching transistor $Q_1$ is a control end of the switching transistor $Q_1$. In other words, the third end of the switching transistor $Q_1$ may be configured to receive the control signal of the control circuit 14.

In this embodiment, the first end of the switching transistor $Q_2$ may be further connected to a first end of a bus

capacitor $C_2$, a second end of the bus capacitor $C_2$ may be connected to a first end of a bus capacitor $C_1$, and a second end of the bus capacitor $C_1$ may be further connected to the second end of the switching transistor $Q_1$ via the resistor $R_1$.

The power stage circuit 121 may be configured to receive an input voltage $V_{in}$, and provide an output voltage for a primary-side winding 16 of the transformer 122 based on the control signal provided by the control circuit 14. The transformer 122 includes the primary-side winding 16, a secondary-side winding 18, and a magnetic core 17. The secondary-side winding 18 of the transformer 122 is coupled to the primary-side winding 16 via the magnetic core 17. The primary-side winding 16 of the transformer 122 is configured to receive the output voltage of the power stage circuit 121, and may generate a primary-side winding voltage. The secondary-side winding 18 of the transformer 122 is coupled to the primary-side winding 16, and a secondary-side winding voltage may be generated on the secondary-side winding 18. It may be understood that the primary-side winding may be a winding placed at a primary stage of the transformer. The secondary-side winding may be a winding placed at a secondary stage of the transformer.

A first end of the primary-side winding 16 is electrically connected to a node $P_1$ between the second end of the switching transistor $Q_2$ and the first end of the switching transistor $Q_1$, and a second end of the primary-side winding 16 is electrically connected to a node $P_2$ between the second end of the capacitor $C_2$ and the first end of the capacitor $C_1$.

The rectifier circuit 123 may be configured to receive the secondary-side winding voltage on the secondary-side winding 18, and convert the secondary-side winding voltage into an output voltage $V_1$ to a filter circuit 124. The filter circuit 124 may be configured to filter the output voltage $V_1$, and provide an output voltage $V_{out}$ obtained through filtering for a load 20.

The rectifier circuit 123 may include a switching transistor $Q_3$ and a switching transistor $Q_4$. A first end of the switching transistor $Q_3$ is electrically connected to a first end of the secondary-side winding 18, a second end of the switching transistor $Q_3$ is electrically connected to a second end of the switching transistor $Q_4$, and a first end of the switching transistor $Q_4$ is electrically connected to a second end of the secondary-side winding 18. A third end of the switching transistor $Q_3$ is a control end of the switching transistor $Q_3$. In other words, the third end of the switching transistor $Q_3$ may be configured to receive the control signal sent by the control circuit 14. A third end of the switching transistor $Q_4$ is a control end of the switching transistor $Q_4$. In other words, the third end of the switching transistor $Q_4$ may be configured to receive the control signal of the control circuit 14.

It may be understood that the switching transistors $Q_1$ to $Q_4$ may be metal-oxide-semiconductor field-effect transistors (Metal-Oxide-Semiconductor Field-Effect Transistors, MOSFETs), insulated gate bipolar transistors (Insulated Gate Bipolar Transistors, IGBTs), bipolar power transistors (bipolar power transistors), wide-bandgap semiconductor field-effect transistors, or the like.

The filter circuit 124 may include an inductor $L_b$ and a capacitor $C_o$. A first end of the inductor $L_b$ may be electrically connected to a midpoint of the secondary-side winding 18, a second end of the inductor $L_b$ may be electrically connected to a first end of the capacitor $C_o$ and a first end of the load 20, a second end of the capacitor $C_o$ may be grounded, and the second end of the capacitor $C_3$ is further electrically connected to the second end of the switching transistor $Q_3$, the second end of the switching transistor $Q_4$, and a second end of the load 20.

In this embodiment, the control circuit 14 may be electrically connected to an output end of the power stage circuit 121. The control circuit 14 may sample the output voltage or an output current of the power stage circuit 121.

Specifically, the control circuit 14 may include a sampling and amplification circuit 141, a comparison circuit 142, a reference voltage generation circuit 143, and a processing circuit 144.

The sampling and amplification circuit 141 is electrically connected to the voltage conversion circuit 12 and the comparison circuit 142. The comparison circuit 142 is electrically connected to the processing circuit 144 and the reference voltage generation circuit 143. The sampling and amplification circuit 141 may sample an output parameter of the voltage conversion circuit 12, amplify the output parameter based on a preset coefficient, and output an amplified parameter. For example, the output parameter may be an output current of the voltage conversion circuit 12. In a possible example, the sampling and comparison circuit 21 may sample the output current of the power stage circuit 121, and output a corresponding sampling signal to the comparison circuit 142 based on the sampled output current.

The sampling and amplification circuit 141 may include an amplifier $U_1$, a transistor $Q_5$, current sources $S_1$ to $S_3$, and resistors $R_2$ to $R_4$.

A first input end of the amplifier $U_1$ is connected to a first end of the resistor $R_1$ via the resistor $R_2$, and a second input end of the amplifier $U_1$ is connected to a second end of the resistor $R_1$ via the resistor $R_3$. The current source $S_1$ is electrically connected to the resistor $R_2$ and the first input end of the amplifier $U_1$. An output end of the amplifier $U_1$ is electrically connected to a first end of the transistor $Q_5$, and a second end of the transistor $Q_5$ is electrically connected to the second input end of the amplifier $U_1$ and the resistor $R_3$. A third end of the transistor $Q_5$ is electrically connected to the current source $S_2$. The current source $S_3$ is grounded via the resistor $R_4$. The current source $S_2$ and the current source $S_3$ may form a $1:N_{cs}$ current mirror. A node $P_3$ between the current source $S_3$ and the resistor $R_4$ may be connected to the comparison circuit 142, and the node $P_3$ may output a voltage $V_{CS\_O}$ to the comparison circuit 142.

It may be understood that the transistor $Q_5$ may be a MOS transistor or a triode.

The sampling and amplification circuit 141 is electrically connected to the two ends of the resistor $R_1$, and the

sampling and amplification circuit 141 may sample a current $I_1$ of the switching transistor $Q_1$ by sampling a current that passes through the resistor $R_1$.

For example, it is assumed that a resistance value of the resistor $R_1$ is r1, a resistance value of the resistor $R_2$ is r2, a resistance value of the resistor $R_3$ is r3, a resistance value of the resistor $R_4$ is r4, and a current output by the current source $S_1$ is $I_{offset}$. It may be understood that the resistance value r2 of the resistor $R_2$ is far greater than the resistance value r1 of the resistor $R_1$. According to a basic working principle of an operational amplification circuit, it can be learned that the voltage $V_{CS\_O}$ output by the node $P_3$ may satisfy the following formula (1):

$$V_{CS\_O} = \frac{I_1 \times r1 + I_{offset} \times r2}{r3} \times N_{CS} \times r4 \quad (1)$$

$V_{CS\_O}$ is the voltage output by the node $P_3$, and $N_{cs}$ is a ratio coefficient of the current mirror formed by the current source $S_2$ and the current source $S_3$.

It may be understood that, in some more specific application scenarios, the resistance value r2 of the resistor $R_2$ may be close to or equal to the resistance value r3 of the resistor $R_3$. Therefore, the voltage $V_{CS\_O}$ output by the node $P_3$ may further satisfy the following formula (2):

$$V_{CS\_O} = I_1 \times k1 + V_{offset} \quad (2)$$

The bias voltage $V_{offset}$ in the foregoing formula (2) may satisfy the following formula (3), and k1 may satisfy the following formula (4):

$$V_{offset} = I_{offset} \times N_{CS} \times r4 \quad (3)$$

$$k1 = \frac{r1 \times N_{CS} \times r4}{r3} \quad (4)$$

It can be learned from the foregoing formulas (1) to (4) that the sampling and amplification circuit 141 may obtain a second current by sampling the current $I_1$ of the switching transistor $Q_1$ and amplifying the sampled current $I_1$ in a proportion of the preset coefficient k1, that is, obtain a voltage $V_{CS\_O}$ related to the current $I_1$ of the switching transistor $Q_1$. Based on such a design, the control circuit 14 in this application may obtain, through sampling through the sampling and amplification circuit 141, a voltage related to the current $I_1$ of the switching transistor $Q_1$.

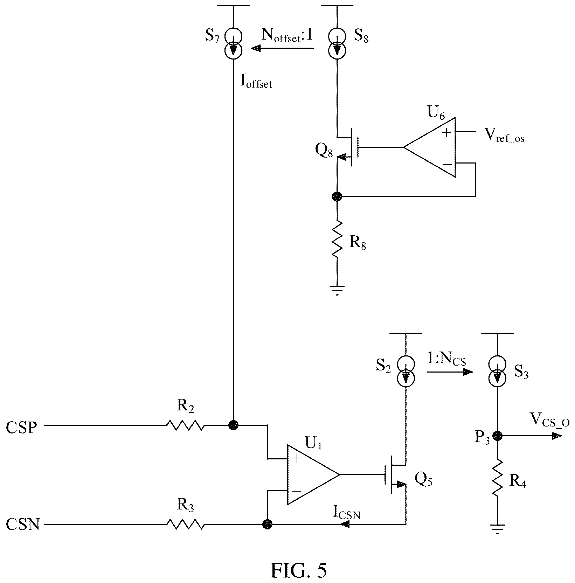

FIG. 5 is a schematic of another structure of a sampling and amplification circuit according to an embodiment of this application.

A difference from the sampling and amplification circuit shown in the embodiment in FIG. 4 lies in that, as shown in FIG. 5, in this embodiment, the sampling and amplification circuit 141 may further include an amplifier $U_6$, a transistor $Q_8$, current sources $S_7$ and $S_8$, and a resistor $R_8$.

It may be understood that the transistor $Q_8$ may be a MOS transistor or a triode.

A first input end of the amplifier $U_6$ is connected to the processing circuit 144, a second input end of the amplifier $U_6$ is grounded via the resistor $R_8$, an output end of the amplifier $U_6$ is connected to a first end of the transistor $Q_8$, a second end of the transistor $Q_8$ is grounded via the resistor $R_8$, and a third end of the transistor $Q_8$ is connected to the current source $S_8$. The current source $S_7$ is electrically connected to the resistor $R_2$ and the first input end of the amplifier $U_1$. The current source $S_8$ and the current source $S_7$ may form a 1:$N_{offset}$ current mirror.

For example, it is assumed that a resistance value of the resistor $R_8$ is r8, and a voltage received by the first input end of the amplifier $U_6$ is $V_{ref\_os}$. It can be learned from the basic working principle of the operational amplification circuit that, the voltage $V_{CS\_O}$ output by the node $P_3$ may satisfy the following formula (5):

$$V_{CS\_O} = V_{CS} \times N_{CS} \times \frac{r4}{r3} + V_{ref\_os} \times N_{offset} \times N_{CS} \times \frac{r2}{r3} \times \frac{r4}{r8} \quad (5)$$

$V_{CS\_O}$ is the voltage output by the node $P_3$, $N_{cs}$ is the ratio coefficient of the current mirror formed by the current source $S_2$ and the current source $S_3$, and $N_{offset}$ is a ratio coefficient of a current mirror formed by the current source $S_7$ and the current source $S_8$.

It may be understood that, in this embodiment, $R_2$, $R_3$, $R_4$, and $R_8$ match each other, and an amplification multiple and a bias are affected only by a voltage reference, a current mirror ratio, and a resistor ratio, so that precision can be ensured in design. Therefore, high-precision amplification can be performed on a current of the switching transistor $Q_1$. This improves current sampling precision.

Refer to FIG. 4 again. The reference voltage generation circuit 143 may include resistors $R_5$ to $R_7$, current sources $S_4$ and $S_5$, and a voltage source $S_6$.

A first end of the resistor $R_5$ is connected to a power supply $V_{in}$, a second end of the resistor $R_5$ is grounded via the resistor $R_6$, and a node $P_4$ between the resistor $R_5$ and the resistor $R_6$ may be grounded via the voltage source $S_6$. The current source $S_4$ is grounded via the resistor $R_7$, and two ends of the resistor $R_7$ are respectively connected to the two ends of the current source $S_5$. It may be understood that the current source $S_5$ in this embodiment is a slope current source, and the current source $S_5$ may generate a current slope signal. The current source $S_5$ may receive a slope compensation reset signal slope_rst. A node $P_5$ between the current source $S_4$ and the resistor $R_7$ is electrically connected to the comparison circuit 142, to output a reference signal $V_{REF\_CBC}$ to the comparison circuit 142.

In this embodiment, the comparison circuit 142 may include a comparator $U_2$, a comparator $U_3$, a comparator $U_4$, and a comparator $U_5$.

A first input end of the comparator $U_2$ may be connected to the node $P_3$ between the current source $S_3$ and the resistor $R_4$, to receive the voltage signal $V_{CS\_O}$ output by the node $P_3$. A second input end of the comparator $U_2$ is electrically connected to the processing circuit 144, to receive a reference signal $V_{REF\_SOC}$ output by the processing circuit 144. An output end of the comparator $U_2$ is electrically connected to the processing circuit 144. The comparator $U_2$ may compare the voltage signal $V_{CS\_O}$ with the reference signal $V_{REF\_SOC}$, to output a first comparison signal CMP_SOC to the processing circuit 144.

A first input end of the comparator $U_3$ may be connected to the node $P_3$ between the current source $S_3$ and the resistor $R_4$, to receive the voltage signal $V_{CS\_O}$ output by the node $P_3$. A second input end of the comparator $U_3$ is electrically connected to the reference voltage generation circuit 143, to receive the reference signal $V_{REF\_CBC}$ output by the reference voltage generation circuit 143. An output end of the comparator $U_3$ is electrically connected to the processing circuit 144, and the comparator $U_3$ may compare the voltage signal $V_{CS\_O}$ with the reference signal $V_{REF\_CBC}$, to output a second comparison signal CMP_CBC to the processing circuit 144.

A first input end of the comparator $U_4$ may be connected to the node $P_3$ between the current source $S_3$ and the resistor $R_4$, to receive the voltage signal $V_{CS\_O}$ output by the node $P_3$. A second input end of the comparator $U_4$ is electrically connected to the processing circuit 144, to receive a reference signal $V_{REF\_QOC}$ output by the processing circuit 144. An output end of the comparator $U_4$ is electrically connected to the processing circuit 144, and the comparator $U_4$ may compare the voltage signal $V_{CS\_O}$ with the reference signal $V_{REF\_QOC}$, to output a third comparison signal CMP_QOC to the processing circuit 144.

A first input end of the comparator $U_5$ may be connected to the node $P_3$ between the current source $S_3$ and the resistor $R_4$, to receive the voltage signal $V_{CS\_O}$ output by the node $P_3$. A second input end of the comparator $U_5$ is electrically connected to the processing circuit 144, to receive a reference signal $V_{REF\_NOC}$ output by the processing circuit 144. An output end of the comparator $U_5$ is electrically connected to the processing circuit 144, and the comparator $U_5$ may compare the voltage signal $V_{CS\_O}$ with the reference signal $V_{REF\_NOC}$, to output a fourth comparison signal CMP_NOC to the processing circuit 144.

The comparison circuit 142 receives the voltage signal $V_{CS\_O}$ output by the sampling and amplification circuit 141, and correspondingly outputs a comparison signal to the processing circuit 144. The processing circuit 144 may control a status of the voltage conversion circuit 12 based on the received comparison signal, to implement overcurrent protection on the voltage conversion circuit 12. Examples are used below for description with reference to possible application scenarios.

1. Slow overcurrent protection scenario:

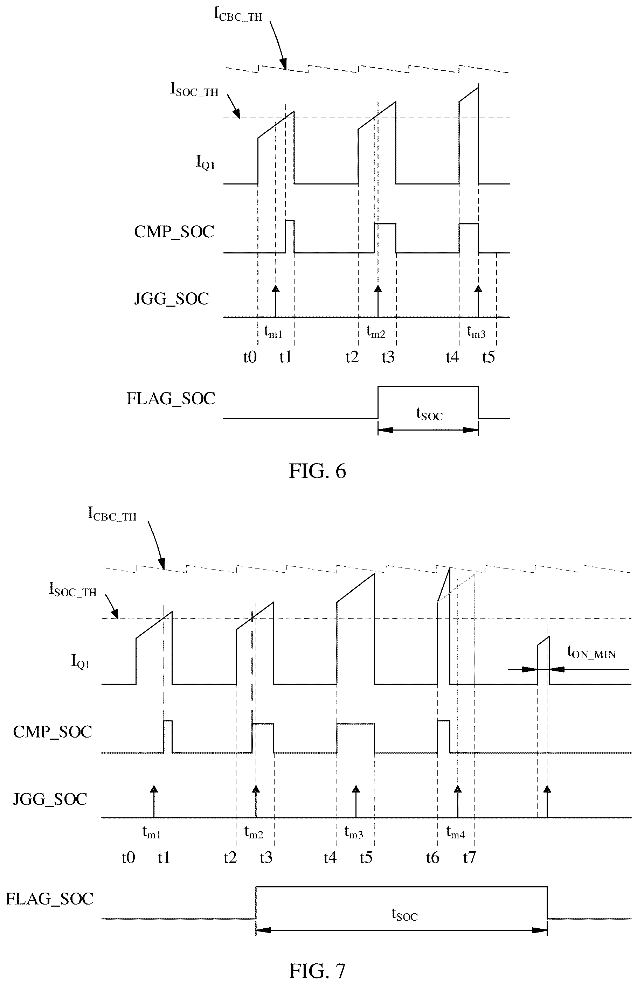

As shown in FIG. 6, $I_{Q1}$ is a current of the switching transistor $Q_1$, and CMP_SOC is a first comparison signal output by the comparator $U_2$. The processing circuit 144 may sample a first comparison signal CMP_SOC when the switching transistor $Q_1$ is at a midpoint of a pulse signal. If a current $I_{Q1}$ of the switching transistor $Q_1$ at the midpoint of the pulse signal is greater than a current threshold $I_{SOC\_TH}$, the first comparison signal CMP_SOC is at a high level. In this case, the processing circuit 144 may start to perform overcurrent timing. If a timing time $t_{SOC}$ is greater than or equal to a preset time $t_{SOC\_DELAY}$, the processing circuit 144 may determine that the voltage conversion circuit 12 is in an overcurrent state. That is, the processing circuit 144 stops outputting the pulse signal to the voltage conversion circuit 12, and enters a hiccup state. If a timing time $t_{SOC}$ is less than a preset time $t_{SOC\_DELAY}$, the timing time is reset.

For example, within a time period from t0 to t1, the processing circuit 144 outputs the pulse signal to the switching transistor $Q_1$. $t_{m1}$ is a midpoint moment between the moment t0 and the moment t1. The processing circuit 144 may sample a first comparison signal CMP_SOC of the switching transistor $Q_1$ at the moment $t_{m1}$. As shown in FIG. 6, a current $I_{Q1}$ of the switching transistor $Q_1$ at the moment $t_{m1}$ is less than the current threshold $I_{SOC\_TH}$, and the first comparison signal CMP_SOC is at a low level. The processing circuit 144 does not perform overcurrent timing. Within the time period from t0 to t1, when the current $I_{Q1}$ of the switching transistor $Q_1$ is greater than or equal to the current threshold $I_{SOC\_TH}$, the comparator $U_2$ outputs a high-level first comparison signal CMP_SOC to the processing circuit 144.

Within a time period from t1 to t2, the processing circuit 144 does not output the pulse signal to the switching transistor $Q_1$, so that the switching transistor $Q_1$ stops outputting the current.

The time period from t0 to t1 and the time period from t1 to t2 are a switching cycle T.

Within a time period from t2 to t3, the processing circuit 144 outputs the pulse signal to the switching transistor $Q_1$. tm2 is a midpoint moment between the moment t2 and the moment t3. The processing circuit 144 may sample a first comparison signal CMP_SOC of the switching transistor $Q_1$ at the moment $t_{m2}$. As shown in FIG. 6, a current $I_{Q1}$ of the switching transistor $Q_1$ at the moment $t_{m2}$ is greater than or equal to the current threshold $I_{SOC\_TH}$, and the processing circuit 144 may sample the high-level first comparison signal CMP_SOC. The processing circuit 144 starts to perform overcurrent timing. Within the time period from t2 to t3, when the current $I_{Q1}$ of the switching transistor $Q_1$ is greater than or equal to the current threshold $I_{SOC\_TH}$, the comparator $U_2$ outputs the high-level first comparison signal CMP_SOC to the processing circuit 144.

Within a time period from t3 to t4, the processing circuit 144 does not output the pulse signal to the switching transistor $Q_1$, so that the switching transistor $Q_1$ stops outputting the current.

The time period from t2 to t3 and the time period from t3 to t4 are a switching cycle T.

Within a time period from t4 to t5, the processing circuit 144 outputs the pulse signal to the switching transistor $Q_1$. tm3 is a midpoint moment between the moment t4 and the moment t5. The processing circuit 144 may sample a current $I_{Q1}$ of the switching transistor $Q_1$ at the moment tm3. As shown in FIG. 6, the current $I_{Q1}$ of the switching transistor $Q_1$ at the moment tm3 is greater than or equal to the current threshold $I_{SOC\_TH}$, and the processing circuit 144 may sample the high-level first comparison signal CMP_SOC. In this case, the timing time $t_{SOC}$ is greater than or equal to $t_{SOC\_DELAY}$, and the processing circuit 144 may determine that the voltage conversion circuit 12 is in a slow overcurrent state. That is, the processing circuit 144 stops outputting the pulse signal to the voltage conversion circuit 12, and enters the hiccup state.

It may be understood that, a current, at a midpoint in which the pulse signal is at a high level, sampled in this application does not change with the input voltage $V_{in}$. Therefore, in this application, accurate output current monitoring can be implemented without compensating the input voltage $V_{in}$.

In a scenario, as shown in FIG. 7, within a time period from t6 to t7, $t_{m4}$ is a midpoint moment between the moment t6 and the moment t7. If the current of the switching transistor $Q_1$ is triggered to a current threshold $I_{CBC\_TH}$, a duty cycle of the pulse signal decreases, and the processing circuit 144 cannot sample overcurrent information. The processing circuit 144 may determine that the current of the switching transistor $Q_1$ is still greater than the current threshold $I_{SOC\_TH}$. In another scenario, when the duty cycle of the pulse signal is output by using small pulse width, to avoid noise interference, a midpoint moment of a time period in which the pulse signal is at a high level needs to be adjusted to a moment after a blanking time.

Based on the control circuit in this embodiment of this application, a current midpoint may be used as an overload protection point, and overload protection precision is high, so that overcurrent protection can be accurately performed on the power module in a timely manner. This improves security and stability of the power module.

2. Fast overcurrent protection scenario:

In some possible scenarios, when a short-circuit working condition occurs in the power module, the control circuit may output a pulse signal with a minimum duty cycle. In this case, the pulse signal cannot limit a current rise of the inductor $L_b$. In other words, a current of the inductor $L_b$ exceeds a safe range. Consequently, this further causes a security risk.

Therefore, the control circuit 14 provided in this application may compare a sampled current with an overcurrent protection threshold (namely, a current threshold $I_{QOC\_TH}$). The current threshold $I_{CBC\_TH}$ is a fast overcurrent protection threshold greater than a signal-by-signal current limiting threshold $I_{CBC\_TH}$.

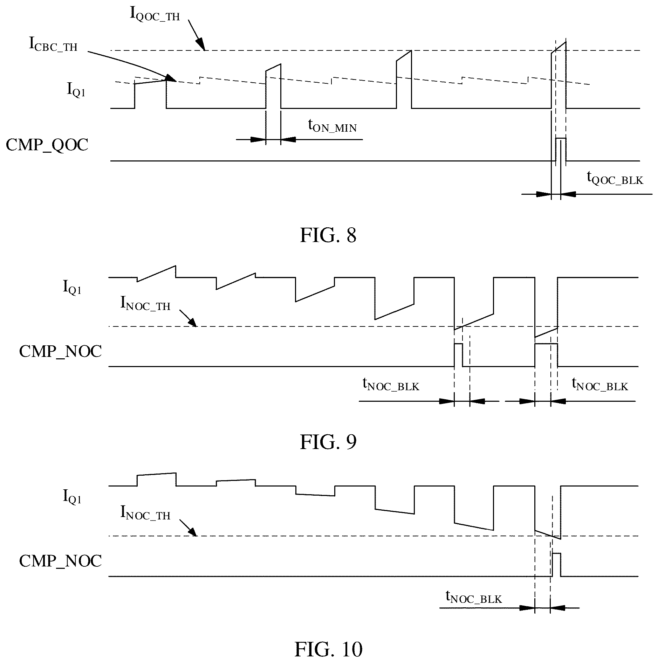

As shown in FIG. 8, $I_{Q1}$ is a current of the switching transistor $Q_1$, and CMP_QOC is a third comparison signal output by the comparator $U_4$. When the current $I_{Q1}$ sampled by the control circuit 14 is greater than or equal to the current threshold $I_{QOC\_TH}$, the processing circuit 144 may detect that the comparator $U_4$ outputs a high-level third comparison signal CMP_QOC.

As shown in FIG. 8, after a leading-edge blanking time $t_{QOC\_BLK}$ ends, the processing circuit 144 stops outputting the pulse signal, to enter the hiccup state. In this way, the current of the inductor $L_b$ may be limited to continue to rise, and an overcurrent of the voltage conversion circuit 12 is protected.

3. Backflow current protection scenario:

In some possible scenarios, for example, when there is backflow of the current output by the switching transistor $Q_1$, the current of the inductor $L_b$ reverses. If a reverse current of the inductor $L_b$ continuously increases, a circuit cannot clamp a voltage when rectifier transistors (such as the switching transistor $Q_3$ and the switching transistor $Q_4$) are turned

off.

For example, in a scenario, when an output residual voltage of a system is very high, a duty cycle of the switching transistor $Q_1$ starts from 0 and increases slowly. If a slow-spread speed of duty cycles of the rectifier transistors (namely, the switching transistor $Q_3$ and the switching transistor $Q_4$) is fast, freewheeling time of the rectifier transistors is excessively long, and consequently, the current of the inductor $L_b$ is reversely increased, thereby forming a backflow current. In another scenario, if the input voltage $V_{in}$ quickly drops from a high voltage to a low voltage, the duty cycle of the switching transistor $Q_1$ spreads slowly, and the freewheeling time of the rectifier transistors is longer than that in a steady state. As a result, the current of the inductor $L_b$ is smaller than that in the steady state, and even a backflow phenomenon occurs.

As shown in FIG. 9, $I_{Q1}$ is a current of the switching transistor $Q_1$, and CMP_NOC is a fourth comparison signal output by the comparator $U_4$. When a backflow current of the switching transistor $Q_1$ is less than the current threshold $I_{NOC\_TH}$, the processing circuit 144 may detect that the comparator $U_5$ outputs a high-level fourth comparison signal CMP_NOC. After a leading-edge blanking time $I_{NOC\_BLK}$ ends, the processing circuit 144 turns off all the switching transistors $Q_1$ to $Q_4$ and enters the hiccup state, to reduce the reverse current of the inductor $L_b$, and protect the overcurrent of the voltage conversion circuit 12.

It may be understood that, in another possible scenario, when the input voltage $V_{in}$ is less than the output voltage $V_{out}$, and the rectifier transistors (such as the switching transistor $Q_3$ and the switching transistor $Q_4$) are turned on, the current of the inductor $L_b$ increases negatively. As shown in FIG. 10, when the backflow current of the switching transistor $Q_1$ is less than the current threshold $I_{NOC\_TH}$, the processing circuit 144 may detect that the comparator $U_5$ outputs the high-level fourth comparison signal CMP_NOC. The processing circuit 144 needs to stop outputting the pulse signal to the switching transistors $Q_1$ to $Q_4$. After the leading-edge blanking time $I_{NOC\_BLK}$ ends, the processing circuit 144 turns off all the switching transistors $Q_1$ to $Q_4$ and enters the hiccup state, to reduce the reverse current of the inductor $L_b$, and protect the overcurrent of the voltage conversion circuit 12.

4. Signal-by-signal current limiting protection scenario:

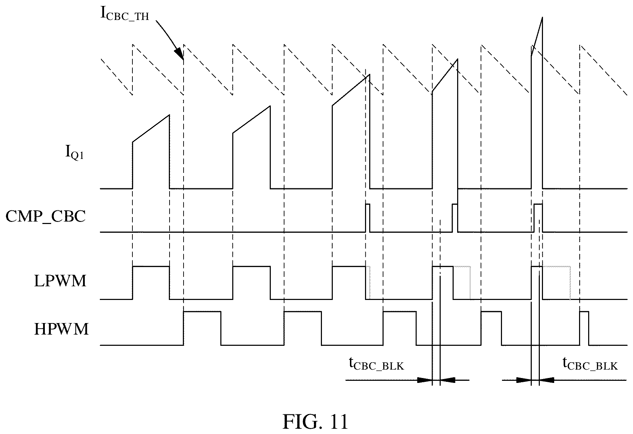

As shown in FIG. 11, $I_{Q1}$ is a current of the switching transistor $Q_1$, CMP_CBC is a second comparison signal output by the comparator $U_3$, LPWM is a pulse signal output by the processing circuit 144 to the switching transistor $Q_1$, and HPWM is a pulse signal output by the processing circuit 144 to the switching transistor $Q_2$. If the current $I_{Q1}$ of the switching transistor $Q_1$ is greater than or equal to the current threshold $I_{CBC\_TH}$, and the comparator U3 outputs a high-level comparison signal CMP_CBC to the processing circuit 144 after the blanking time $t_{CBC\_BLK}$ ends, the processing circuit 144 stops outputting the pulse signal to all the switching transistors $Q_1$ in one switching cycle until a next switching cycle starts. It may be understood that, to ensure magnetic balance of the transformer 122, pulse matching needs to be performed on pulse signals output to the switching transistor $Q_1$ and the switching transistor $Q_2$.

Based on such a design, in this application, multiple current protection such as slow overcurrent protection, fast overcurrent protection, backflow current protection, and signal-by-signal current limiting protection can be implemented without adding an IC port. In this application, a simpler peripheral circuit is used, to implement more current protection functions.

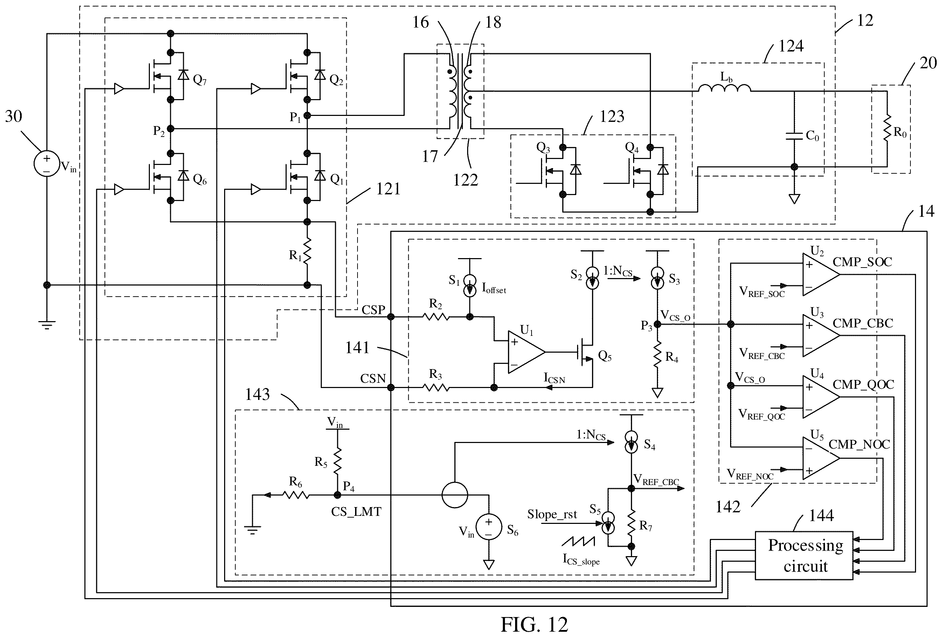

FIG. 12 is a schematic of a structure of a power module 10 according to another embodiment of this application.

A difference from the power module 10 shown in the embodiment in FIG. 4 lies in that, in this embodiment, as shown in FIG. 12, a power stage circuit 121 is a full-bridge circuit. That is, the power stage circuit 121 may include a switching transistor $Q_1$, a switching transistor $Q_2$, a switching transistor $Q_6$, and a switching transistor $Q_7$.

A first end of the switching transistor $Q_2$ is connected to a first output end of an input power supply 30, a second end of the switching transistor $Q_2$ is connected to a first end of the switching transistor $Q_1$, and a second end of the switching transistor $Q_1$ is connected to a second output end of the input power supply 30 and a reference ground via a resistor $R_1$. A third end of the switching transistor $Q_1$ is connected to a processing circuit 144, and a third end of the switching transistor $Q_2$ is connected to the processing circuit 144. The third end of the switching transistor $Q_2$ is a control end of the switching transistor $Q_2$. The third end of the switching transistor $Q_1$ is a control end of the switching transistor $Q_1$.

A first end of the switching transistor $Q_7$ is connected to the first output end of the input power supply 30, a second end of the switching transistor $Q_7$ is connected to a first end of the switching transistor $Q_6$, a second end of the switching transistor $Q_6$ is connected to the second end of the switching transistor $Q_1$, and a node $P_2$ between the second end of the switching transistor $Q_7$ and the first end of the switching transistor $Q_6$ is connected to a second end of a primary-side winding 16. A third end of the switching transistor $Q_7$ is connected to the processing circuit 144, and a third end of the switching transistor $Q_6$ is connected to the processing circuit 144. The third end of the switching transistor $Q_7$ is a control end of the switching transistor $Q_7$. The third end of the switching transistor $Q_6$ is a control end of the switching transistor $Q_6$.

It may be understood that an embodiment of this application further provides a communication device. The communication device may be but is not limited to a router, a switch, or the like. The communication device may include the power module in the foregoing embodiments, and the power module may supply power to a load in the communication device.

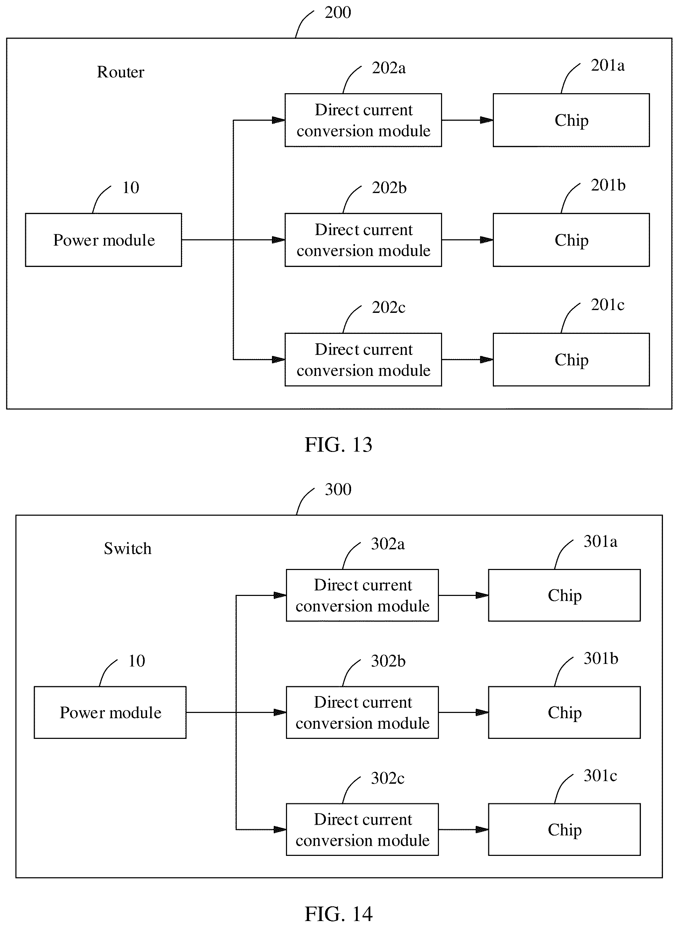

Refer to FIG. 13. An embodiment of this application further provides a router 200. The router 200 may include one or more chips and the power module described in the foregoing embodiments. The power module may be configured to supply power to the one or more chips. In an example, the router 200 may include a plurality of chips 201a, 201b, 201c, and a power module 10. The power module 10 may be electrically connected to an input power supply. The power module 10 may convert a first voltage input by the input power supply into a second voltage, to supply power to the plurality of chips 201a, 201b, and 201c. The first voltage may be a 48 V direct current voltage. The second voltage may be a 12 V direct current voltage. The power module 10 may convert a 48 V direct current voltage input by the input power supply into a 12 V direct current voltage, to supply power to the plurality of chips 201a, 201b, and 201c.

It may be understood that, in another possible application scenario, the router 200 may further include a plurality of direct current conversion circuits 202a, 202b, and 202c. The plurality of direct current conversion circuits 202a, 202b, and 202c are in a one-to-one correspondence with and electrically connected to the plurality of chips 201a, 201b, and 201c. The direct current conversion circuit 202a is electrically connected between an output end of the power module 10 and the chip 201a. The direct current conversion circuit 202b is electrically connected between the output end of the power module 10 and the chip 201b. The direct current conversion circuit 202c is electrically connected between the output end of the power module 10 and the chip 201c. The direct current conversion circuit 202a is configured to convert a voltage output by the power module 10 into a voltage required by the chip 201a. The direct current conversion circuit 202b is configured to convert the voltage output by the power module 10 into a voltage required by the chip 201b. The direct current conversion circuit 202c is configured to convert the voltage output by the power module 10 into a voltage required by the chip 201c.

Refer to FIG. 14. An embodiment of this application further provides a switch 300. The switch 300 may include one or more chips and the power module described in the foregoing embodiments. The power module may be configured to supply power to the one or more chips. In an example, the switch 300 may include a plurality of chips 301a, 301b, 301c, and a power module 10. The power module 10 may be electrically connected to an input power supply. The power module 10 may convert a first voltage input by the input power supply into a second voltage, to supply power to the plurality of chips 301a, 301b, and 301c. The power module 10 may convert a 48 V direct current voltage input by the input power supply into a 12 V direct current voltage, to supply power to the plurality of chips 301a, 301b, and 301c.

It may be understood that, in another possible application scenario, the switch 300 may further include a plurality of direct current conversion circuits 302a, 302b, and 302c. The plurality of direct current conversion circuits 302a, 302b, and 302c are in a one-to-one correspondence with and electrically connected to the plurality of chips 301a, 301b, and 301c. The direct current conversion circuit 302a is electrically connected between an output end of the power module 10 and the chip 301a. The direct current conversion circuit 302b is electrically connected between the output end of the power module 10 and the chip 301b. The direct current conversion circuit 302c is electrically connected between the output end of the power module 10 and the chip 301c. The direct current conversion circuit 302a is configured to convert a voltage output by the power module 10 into a voltage required by the chip 301a. The direct current conversion circuit 302b is configured to convert the voltage output by the power module 10 into a voltage required by the chip 301b. The direct current conversion circuit 302c is configured to convert the voltage output by the power module 10 into a voltage required by the chip 301c.

A person of ordinary skill in the art should be aware that the foregoing implementations are merely used to describe this application, but are not intended to limit this application. Appropriate modifications and variations made to the foregoing implementations shall fall within the protection scope of this application provided that the modifications and variations fall within the substantive scope of this application.

**Claims**

1.  A power module, wherein the power module comprises a control circuit and a voltage conversion circuit configured to supply power to a load, the control circuit is configured to control the voltage conversion circuit, and the control circuit comprises a sampling and amplification circuit, a comparison circuit, and a processing circuit;

    the sampling and amplification circuit is configured to: sample a first current output by the voltage conversion circuit, amplify the first current based on a preset coefficient, and output a second current;
    the comparison circuit is configured to compare the second current with a first overcurrent threshold, and output a first comparison signal when the second current is greater than or equal to the first overcurrent threshold; and
    the processing circuit is configured to stop outputting a pulse signal to the voltage conversion circuit when receiving the first comparison signal, to perform overcurrent protection on the voltage conversion circuit.

2.  The power module according to claim 1, wherein

    the comparison circuit is further configured to: compare the second current with a second overcurrent threshold, and output a second comparison signal when the second current is greater than or equal to the second overcurrent threshold;

the processing circuit is configured to output the pulse signal to the voltage conversion circuit within a first time period of one or more switching cycles, and start timing when receiving the second comparison signal at a midpoint moment of the first time period; and

the processing circuit is further configured to stop outputting the pulse signal to the voltage conversion circuit when a timing time reaches a preset time.

3. The power module according to claim 1 or 2, wherein

the comparison circuit is configured to compare the second current with a third overcurrent threshold, and output a third comparison signal when the second current is less than the third overcurrent threshold, wherein the third overcurrent threshold is less than the first overcurrent threshold; and

the processing circuit is further configured to stop outputting the pulse signal to the voltage conversion circuit when receiving the third comparison signal.

4. The power module according to any one of claims 1 to 3, wherein

the comparison circuit is further configured to: compare the second current with a fourth overcurrent threshold, and output a fourth comparison signal when the second current is greater than or equal to the fourth overcurrent threshold; and

the processing circuit is further configured to stop outputting the pulse signal to the voltage conversion circuit in the one or more switching cycles when receiving the fourth comparison signal.

5. The power module according to any one of claims 1 to 4, wherein the sampling and amplification circuit comprises an amplifier, a first transistor, a first current source, a second current source, and a third current source, a first input end of the amplifier is connected to a first output end of the voltage conversion circuit via a first resistor, a second input end of the amplifier is connected to a second output end of the voltage conversion circuit via a second resistor, the first current source is electrically connected to the first resistor and the first input end of the amplifier, an output end of the amplifier is electrically connected to a first end of the first transistor, a second end of the first transistor is electrically connected to the second input end of the amplifier, a third end of the first transistor is electrically connected to the second current source, the third current source is grounded via a third resistor, and a first node between the third current source and the third resistor is connected to the comparison circuit.

6. The power module according to claim 5, wherein the control circuit further comprises a reference voltage generation circuit, the reference voltage generation circuit comprises a fourth current source, a fifth current source, and a first voltage source, a first end of the first voltage source is grounded, a second end of the first voltage source is grounded via a fourth resistor, the second end of the first voltage source is further connected to a power supply via a fifth resistor, the fourth current source is grounded via a sixth resistor, two end s of the sixth resistor are respectively connected to two ends of the fifth current source, the current source is configured to receive a slope compensation reset signal, and a node between the fourth current source and the sixth resistor is electrically connected to the comparison circuit.

7. An electronic device, wherein the electronic device comprises an input power supply and a power module, the input power supply is configured to supply power to the power module, the power module comprises a control circuit and a voltage conversion circuit configured to supply power to a load, the control circuit is configured to control the voltage conversion circuit, and the control circuit comprises a sampling and amplification circuit, a comparison circuit, and a processing circuit;

the sampling and amplification circuit is configured to: sample a first current output by the voltage conversion circuit, amplify the first current based on a preset coefficient, and output a second current;

the comparison circuit is configured to compare the second current with a first overcurrent threshold, and output a first comparison signal when the second current is greater than or equal to the first overcurrent threshold; and

the processing circuit is configured to stop outputting a pulse signal to the voltage conversion circuit when receiving the first comparison signal, to perform overcurrent protection on the voltage conversion circuit.

8. The electronic device according to claim 7, wherein

the comparison circuit is further configured to: compare the second current with a second overcurrent threshold, and output a second comparison signal when the second current is greater than or equal to the second overcurrent threshold;

the processing circuit is configured to output the pulse signal to the voltage conversion circuit within a first time period of one or more switching cycles, and start timing when receiving the second comparison signal at a midpoint moment of the first time period; and

the processing circuit is further configured to stop outputting the pulse signal to the voltage conversion circuit when a timing time reaches a preset time.

9. The electronic device according to claim 7 or 8, wherein

the comparison circuit is configured to compare the second current with a third overcurrent threshold, and output a third comparison signal when the second current is less than the third overcurrent threshold, wherein the third overcurrent threshold is less than the first overcurrent threshold; and

the processing circuit is further configured to stop outputting the pulse signal to the voltage conversion circuit when receiving the third comparison signal.

10. The electronic device according to any one of claims 7 to 9, wherein

the comparison circuit is further configured to: compare the second current with a fourth overcurrent threshold, and output a fourth comparison signal when the second current is greater than or equal to the fourth overcurrent threshold; and

the processing circuit is further configured to stop outputting the pulse signal to the voltage conversion circuit in the one or more switching cycles when receiving the fourth comparison signal.

11. The electronic device according to any one of claims 7 to 10, wherein
the sampling and amplification circuit comprises an amplifier, a first transistor, a first current source, a second current source, and a third current source, a first input end of the amplifier is connected to a first output end of the voltage conversion circuit via a first resistor, a second input end of the amplifier is connected to a second output end of the voltage conversion circuit via a second resistor, the first current source is electrically connected to the first resistor and the first input end of the amplifier, an output end of the amplifier is electrically connected to a first end of the first transistor, a second end of the first transistor is electrically connected to the second input end of the amplifier, a third end of the first transistor is electrically connected to the second current source, the third current source is grounded via a third resistor, and a first node between the third current source and the third resistor is connected to the comparison circuit.

12. The electronic device according to claim 11, wherein
the control circuit further comprises a reference voltage generation circuit, the reference voltage generation circuit comprises a fourth current source, a fifth current source, and a first voltage source, a first end of the first voltage source is grounded, a second end of the first voltage source is grounded via a fourth resistor, the second end of the first voltage source is further connected to a power supply via a fifth resistor, the fourth current source is grounded via a sixth resistor, two ends of the sixth resistor are respectively connected to two ends of the fifth current source, the current source is configured to receive a slope compensation reset signal, and a node between the fourth current source and the sixth resistor is electrically connected to the comparison circuit.

13. A router, wherein the router comprises the power module according to any one of claims 1 to 6 and one or more chips, and the power module is connected to the one or more chips, to supply power to the one or more chips.

14. A switch, wherein the switch comprises the power module according to any one of claims 1 to 6 and one or more chips, and the power module is connected to the one or more chips, to supply power to the one or more chips.

FIG. 1

FIG. 2

FIG. 3

FIG. 4

FIG. 5

FIG. 6

FIG. 7

$I_{QOC\_TH}$

$I_{CBC\_TH}$

$I_{Q1}$

$t_{ON\_MIN}$

CMP_QOC

$t_{QOC\_BLK}$

FIG. 8

$I_{Q1}$

$I_{NOC\_TH}$

CMP_NOC

$t_{NOC\_BLK}$

$t_{NOC\_BLK}$

FIG. 9

$I_{Q1}$

$I_{NOC\_TH}$

CMP_NOC

$t_{NOC\_BLK}$

FIG. 10

FIG. 11

FIG. 12

FIG. 13

FIG. 14

## INTERNATIONAL SEARCH REPORT

| International application No. |
| --- |
| **PCT/CN2023/099702** |

| A. | CLASSIFICATION OF SUBJECT MATTER |
| --- | --- |

H02M3/335(2006.01)i

According to International Patent Classification (IPC) or to both national classification and IPC

| B. | FIELDS SEARCHED |
| --- | --- |

Minimum documentation searched (classification system followed by classification symbols)

IPC:H02M

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; IEEE: 华为数字能源, 过流, 保护, 限流, 逐波, 快速, 慢速, 比较, 放大, 采样, 检测, 监测, 采集, 中间, 中点, 计时, over-current, protect+, limit+, sample, amplif+, middle, time

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109066574 A (BEIJING RESEARCH INSTITUTE OF PRECISE MECHATRONIC CONTROLS et al.) 21 December 2018 (2018-12-21) description, paragraphs [0036]-[0052], and figures 1-8 | 1, 4, 7, 10, 13, 14 |
| A | CN 109066574 A (BEIJING RESEARCH INSTITUTE OF PRECISE MECHATRONIC CONTROLS et al.) 21 December 2018 (2018-12-21) description, paragraphs [0036]-[0052], and figures 1-8 | 2, 3, 5, 6, 8, 9, 11, 12 |
| X | CN 213637478 U (WUHAN YONGLI TECHNOLOGY CO., LTD.) 06 July 2021 (2021-07-06) description, paragraphs [0017]-[0028], and figures 1-5 | 1, 3, 4, 7, 9, 10, 13, 14 |
| A | CN 213637478 U (WUHAN YONGLI TECHNOLOGY CO., LTD.) 06 July 2021 (2021-07-06) description, paragraphs [0017]-[0028], and figures 1-5 | 2, 5, 6, 8, 11, 12 |
| X | CN 104218785 A (ZHEJIANG SANHUA CO., LTD.) 17 December 2014 (2014-12-17) description, paragraphs [0099]-[0340], and figures 1-11 | 1, 4, 7, 10, 13, 14 |
| A | CN 104218785 A (ZHEJIANG SANHUA CO., LTD.) 17 December 2014 (2014-12-17) description, paragraphs [0099]-[0340], and figures 1-11 | 2, 3, 5, 6, 8, 9, 11, 12 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 October 2023** | **05 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/099702**

| Patent document cited in search report | | | Publication date (day/month/year) | Patent family member(s) | | | Publication date (day/month/year) |
|---|---|---|---|---|---|---|---|
| CN | 109066574 | A | 21 December 2018 | None | | | |
| CN | 213637478 | U | 06 July 2021 | None | | | |
| CN | 104218785 | A | 17 December 2014 | CN | 104218785 | B | 25 August 2017 |

Form PCT/ISA/210 (patent family annex) (July 2022)